Europäisches Patentamt

European Patent Office

Office européen des brevets

(11) Veröffentlichungsnummer: **0 224 943**
**A2**

# (12) EUROPÄISCHE PATENTANMELDUNG

(21) Anmeldenummer: 86201672.2

(51) Int. Cl.⁴: **G01D 5/26**

(22) Anmeldetag: 29.09.86

(30) Priorität: 01.10.85 DE 3534990

(43) Veröffentlichungstag der Anmeldung:
10.06.87 Patentblatt 87/24

(84) Benannte Vertragsstaaten:
DE FR GB IT

(71) Anmelder: **Philips Patentverwaltung GmbH
Billstrasse 80
D-2000 Hamburg 28(DE)**
**DE**melder: **N.V. Philips' Gloellampenfabrieken
Groenewoudseweg 1
NL-5621 BA Eindhoven(NL)**
**FR GB IT**

(72) Erfinder: **Martens, Gerhard
Bresslauer Strasse 40
D-2359 Henstedt-Ulzburg(DE)**
Erfinder: **Orlowski, Reiner
Rotdornweg 17
D-2085 Quickborn(DE)**
Erfinder: **Kordts, Jürgen
Pulverstrasse 11
D-2000 Wedel(DE)**

(74) Vertreter: **Koch, Ingo et al
Philips Patentverwaltung GmbH Billstrasse
80 Postfach 105149
D-2000 Hamburg 28(DE)**

(54) **Verfahren zur wellenlängenselektiven Messung der in einem optischen Übertragungssystem hervorgerufenen Abschwächung der Intensität einer optischen Strahlung.**

(57) Die Erfindung betrifft ein Verfahren zur wellenlängenselektiven Messung der in einem optischen Übertragungssystem hervorgerufenen Abschwächung der Intensität einer optischen Strahlung, welche Licht mindestens zweier Wellenlängen enthält. Die wellenlängenselektive Messung wird bei gleichzeitig übertragenen Strahlungen verschiedener und gegebenenfalls eng benachbarter Wellenlängen auf einfache Weise dadurch zuverlässig ermöglicht, daß das Licht jeder Wellenlänge durch optische Sender erzeugt wird, deren Sendeintensitäten mit voneinander verschiedenen, jedoch jeweils konstanten Modulationsfrequenzen moduliert werden, daß die Modulationsamplituden durch eine oder mehrere optische Kontrolldetektoren gemessen werden, denen ein Teil der modulierten Strahlung zugeführt wird, daß danach die modulierten optischen Strahlungen in das optische Übertragungssystem geleitet werden, daß die das Übertragungssystem verlassende Strahlung in einem einzigen Photodetektor in ein elektrisches Summensignal umgewandelt wird, welches danach parallel auf jeder Modulationsfrequenz zugeordnete und nur diese jeweils durchlassende elektrische Filter geleitet wird, und daß - schließlich die nach den Filtern gemessenen Amplitudenschwankungen getrennt für jede Wellenlänge jeweils mit den Modulationsamplituden in einer elektrischen Vergleichs-und Datenausgabeschaltung verglichen werden.

Fig.1

**Verfahren zur wellenlängenselektiven Messung der in einem optischen Übertragungssystem hervorgerufenen Abschwächung der Intensität einer optischen Strahlung.**

Die Erfindung bezieht sich auf ein Verfahren zur wellenlängenselektiven Messung der in einem optischen Übertragungssystem hervorgerufenen Abschwächung der Intensität einer optischen Strahlung, welche Licht mindestens zweier Wellenlängen enthält. Ein solches Verfahren ist durch die DE-OS 3l 38 06l in Anwendung für Druckmessungen mittels eines optischen Sensors bekannt.

Im Sensor wird in Abhängigkeit von der zu messenden physikalischen Größe wie z.B. Druck, Druckdifferenz, Kraft oder Temperatur die Lichtintensität geändert. Der veränderte Intensitätswert wird zur Empfänger-und Auswerteeinheit geführt.

Auf der gesamten Übertragungsstrecke jedoch, von der Sendeeinheit zum Sensor und vom Sensor zur Empfängereinheit, erfährt das Licht zusätzlich eine Dämpfung. Sie hängt ab von den Eigenschaften der Faser und von den Eigenschaften der Spleiß-und Steckverbindungen. Diese Eigenschaften sind zeitlich jedoch nicht konstant. Äußere mechanische und thermische Belastungen der Faserstrecke und die mangelnde Reproduzierbarkeit von Steckverbindungen sind Größen, die einen unkontrollierbaren Einfluß auf die Intensität des Lichts in der Faserstrecker haben und dadurch die Informationen über die physikalische Meßgröße verfälschen.

Zur Korrektur des Sensorsignals ist eine Information über die Streckendämpfung nötig. Deshalb werden zwei Messungen mit Licht der Wellenlängen λl bzw. λ2 ausgeführt, von denen das Licht der Wellenlänge λ2 beispielsweise am Sensor vorbeigeführt wird. Man mißt folglich zugehörige Intensitäten:

$I_1 = I_{01} . T_1 . S_1$

$I_2 = I_{02} . T_2 . S_2$

Hierbei sind $I_{01}$, $I_{02}$ die Primärintensitäten des Senders, $T_1$, $T_2$ die Transmissionen der Faserstrecke und $S_1$, $S_2$ die Transmissionen des Sensors bei den Wellenlängen λl bzw. λ2 Der Quotient liefert drei Terme:

$$\frac{I_1}{I_2} = \frac{I_{01}}{I_{02}} \cdot \frac{T_1(\lambda_1)}{T_2(\lambda_2)} \cdot S_1(\lambda_1)$$

Der Quotient $I_{01}/I_{02}$ ist in der Sende/Empfangseinheit eine bekannte Größe.

Der Quotient $T_1(\lambda_1) / T_2(\lambda_2)$ ist nur dann konstant, wenn die relativen Änderungen der Transmissionen der Übertragungsstrecke unter der Einwirkung einer äußeren physikalischen Belastung gleich sind. Dies ist im allgemein aber nur dann der Fall, wenn die beiden Wellenlängen λl und λ2 sehr nahe beieinanderliegen, so daß dann eine eindeutige Aussage über den Transmissionswert $S_1(\lambda_1)$ erhalten wird.

In der Sendeeinheit werden mit Hilfe zweier LED's oder Laserdioden die primären Lichtintensitäten $I_{01}$ und $I_{02}$ mit den Wellenlängen λl und λ2 erzeugt und in zwei Fasern eingekoppelt. Jeweils Teile der primären Intensitäten werden zur Regelung der Intensitätshöhe benutzt oder dienen als momentaner Meßwert für die Primärintensität und stehen der Auswerteeinheit über eine Photodiode als elektrisches Signal zur Verfügung. Über einen Koppler gelangen beide Lichtintensitäten $I_{01}$ und $I_{02}$ in die Sendefaser, werden von ihr zum Sensor geführt und im wellenlängendispersiven Sensor unterschiedlich durch die zu messende physikalische Größe beeinflußt. Über eine gemeinsame Empfangsfaser, die mit der Sendefaser identisch sein kann, gelangen beide Lichtanteile zur Empfänger-und Auswerteinheit. Dort werden die Sensorinformationen, die in $I_1$ und $I_2$ stecken, aus dem Summensignal $I_1 + I_2$ herausgelöst. Dies kann auf optischem oder auf elektronischem Wege erfolgen.

Das optische Demultiplexen geschieht mit Hilfe von wellenlängendispersiven Elementen, wie einem Dispersionsprisma, einem Beugungsgitter oder zwei Wellenlängenfiltern, die einem zusätzlichen Koppler bzw. optischen Strahlteiler in der Empfangseinheit nachgeschaltet sind. Das auf optischem Wege getrennte Licht der Intensität $I_1$ bzw. $I_2$ wird dann auf je eine Photodiode gegeben und gemessen. Nachteilig an dieser Lösung, im Vergleich zur rein elektronischen Lösung, ist die Verwendung zweier Photodetektoren, die z.B. über die Temperaturabhängigkeit ihres Dunkelstroms und ihrer im allgemeinen unterschiedlichen Kennlinie und ihres Alterungsverhaltens Fehler in der Signalauswertung verursachen. Außerdem sind die optischen Komponenten für das Zerlegen des Lichts in sehr eng benachbarte Wellenlängen sehr teuer und deren Justierung muß sehr präzise vorgenommen werden.

2

Im bekannten Fall erfolgt die Trennung der Informationen mit elektronischen Mitteln. Die Lichtintensitäten $I_1$ und $I_2$ werden nicht gleichzeitig sondern wechselseitig als Lichtpulse der Höhe $I_{01}$ und $I_{02}$ zum Sensor geführt. Die vom Sensor in der Empfangs-und Auswerteeinheit eintreffenden Pulse der Intensität $I_1$ bzw. $I_2$, die ja wechselseitig die Wellenlängen λ1 bzw. λ2 besitzen, werden mit Hilfe einer einzigen Photodiode nachgewiesen, so daß keine zusätzlichen optischen Komponenten im Empfängerteil erforderlich sind.

Als Nachteil erweist sich auch bei diesem Verfahren, daß der Dunkelstrom der Photodiode das Intensitätssignal verändert. Weiterhin kommt hinzu, daß durch das wechselseitige Abfragen des Sensors mit beiden Wellenlängen schnelle Änderungen auf der Übertragungsstrecke, wie z.B. mechanische Schwankungen von Steckverbindungen, sich als Störungen bemerkbar machen können und eine Änderung des Meßsignals am Sensor vortäuschen.

Der Erfindung liegt die Aufgabe zugrunde, daß Verfahren der eingangs genannten Art derart zu gestalten, daß die wellenlängenselektive Messung bei gleichzeitig übertragenen Strahlungen verschiedener und gegebenenfalls eng benachbarter Wellenlängen auf einfache Weise zuverlässig möglich ist.

Die Lösung gelingt dadurch, daß das Licht jeder Wellenlänge durch optische Sender erzeugt wird, deren Sendeintensitäten mit voneinander verschiedenen, jedoch jeweils konstanten Modulationsfrequenzen amplitudenmoduliert werden, daß die Modulationsamplituden durch eine oder mehrere optische Kontrolldetektoren gemessen werden, denen ein Teil der modulierten Strahlung zugeführt wird, daß danach die modulierten optischen Strahlungen in das optische Übertragungssystem geleitet werden, daß die das Übertragungssystem verlassende Strahlung in einem einzigen Photodetektor in ein elektrisches Summensignal umgewandelt wird, welches danach parallel auf jeder Modulationsfrequenz zugeordnete und nur die jeweilige Frequenz durchlassende elektrische Filter geleitet wird, und daß schließlich die nach den Filtern gemessenen Amplitudenschwankungen getrennt für jede Wellenlänge jeweils mit den Modulitationsamplituden der Sendeintensitäten in einer elektronischen Vergleichs-und Datenausgabeschaltung verglichen werden.

Die Erfindung ist vorteilhaft anwendbar bei der Messung des spektralen Dämpfungsverlaufs eines Lichtwellenleiters (LWL), da Meßwerte für verschiedene Wellenlängen gleichzeitig in einfacher Weise ermittelt werden können. Ein bevorzugter Anwendungsfall ist die Druck-oder Temperaturmessung mittels optischer Sensoren.

Anhand der Beschreibung von in der Zeichnung dargestelltn vorteilhaften Ausführungsbeispielen wird die Erfindung näher erläutert.

Fig. I zeigt in vereinfachter Darstellung eine Meßanordnung zur Ausübung des erfindungsgemäßen Verfahrens.

Fig. 2 zeigt einen abgewandelten Teilbereich einer Meßanordnung nach Figur I.

Fig. 3 zeigt eine Meßanordnung mit einer besonders vorteilhaften Anordnung zur Messung der Modulationsamplituden.

Das optische Übertragungssystem gemäß Fig. I mit dem optischen Sensor I und den optischen Leitungen 2 und 3 ist an eine Meßeinrichtung 4 optisch angeschlossen. Der optische Sensor I ist elektrisch passiv und enthält einen optischen Meßfühler 5, dessen Dämpfungsverhalten beispielsweise druck-oder temperaturabhängig sein kann. Der von der Meßeinrichtung 4 zu messende Dämpfungswert des Meßfühlers 5 bildet ein Maß für den zu ermittelnden Druck oder die zu messende Temperatur.

Damit man in bekannter Weise den Einfluß unterschiedlicher Dämpfungen in den Zuleitungen 2 und 3 und über die Verbindungen 6, 7, 8 und 9 eliminieren kann, wird im Sensor I über räumlich getrennte Wege a und b Licht mit unterschiedlichen Wellenlängen geführt. Das Licht mit der Wellenlänge λ1 wird über das nur für diese Wellenlänge durchlässige Filter I0 durch den Meßfühler 5 geleitet, während Licht mit der Wellenlänge λ2 auf direktem Weg über das für diese Wellenlänge durchlässige Filter II geleitet wird. Wenn die Wellenlängen λ1 und λ2 eng benachbart sind, kann man den Quotienten der dazugehörigen Transmissionen $T_1$ (λI) und $T_2$ (λ2) als Konstante betrachten.

Das Licht der Wellenlänge λI des optischen Senders I2 wird durch den Modulator I3 mit der Frequenz $f_1$ moduliert, das Licht der Wellenlänge λ2 des optischen Senders I4 durch den Modulator I5 mit der Frequenz $f_2$. Beide Wellenlängen werden über Strahlteiler I6 bzw. I7 durch den optischen Koppler I8 vereint über den Ausgangsverbinder 9 in die Leitung 2 geführt und gelangen schließlich nach unterschiedlichen Abdämpfungen über die Leitung 3 und den Eingangsverbinder 8 gemeinsam ohne Vorschaltung separater optischer Filter auf den Photodetektor I9, welcher vorzugsweise als Photodiode ausgebildet ist. Das elektrische Ausgangssignal des Photodetektors I9 enthält überlagerte Signale der akustischen Frequenzen $f_1$ und $f_2$, die über einfache elektrische Filter 20 und 21 separiert werden und deren Amplituden die Informationen über die unterschiedlichen optischen Dämpfungen über die Wege a bzw b enthalten.

Damit von der Verarbeitungs-und Ausgabeschaltung 22 die gewünschte Meßinformation errechnet und über den Ausgang 23 ausgegeben werden kann, müssen dieser über die Leitungen 24 und 25 die Informationen über die Modulationsamplituden der Sendestrahlungen der optischen Sender I2 und I3 zugeführt werden. Das geschieht über optische Kontrolldetektoren 26 bzw. 27, deren optischen Detektorflächen über die optischen Abzweiger I6 und I7 mit jeweils einem Teil der Sendestrahlung bestrahlt werden, und deren elektrischen Ausgangssignalen der elektrischen Verarbeitung-und Ausgabeschaltung 22 zugeführt werden. Die Ausgangssignale können über die Wege 28 bzw. 29 als Ist-Werte jeweils Regelschaltungen zur Konstanthaltung der Lichtintensitäten der optischen Sender I2 bzw. I4 zugeführt werden.

Mit dem beschriebenen Verfahren können mittels der Meßeinrichtung 4 auch bei Verwendung sehr nahe benachbarter Wellenlängen λI und λ2 die verschiedenen Signale elektrisch zuverlässig getrennt werden, da der Abstand der Modulationsfrequenzen sehr groß gewählt werden kann. Beispielsweise wurde f₁ = 500 KHz und f₂ = 5 KHz sowie λI = 800 nm und λ2 = 880 nm gewählt. Die Bandbreite der elektrischen Filter 20 und 2I durfte sehr groß gewählt werden, so daß sie sehr einfach aufgebaut sein konnten.

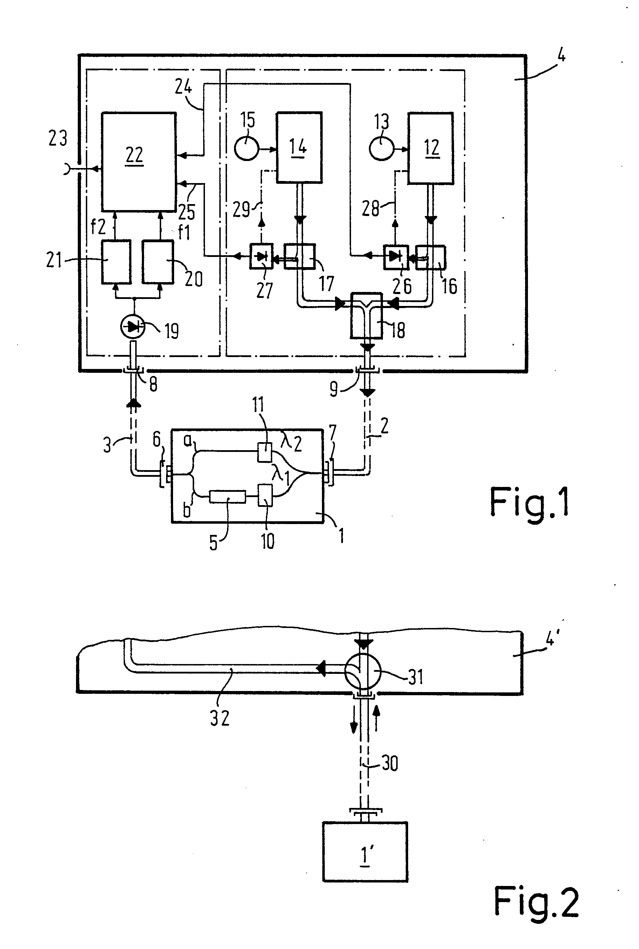

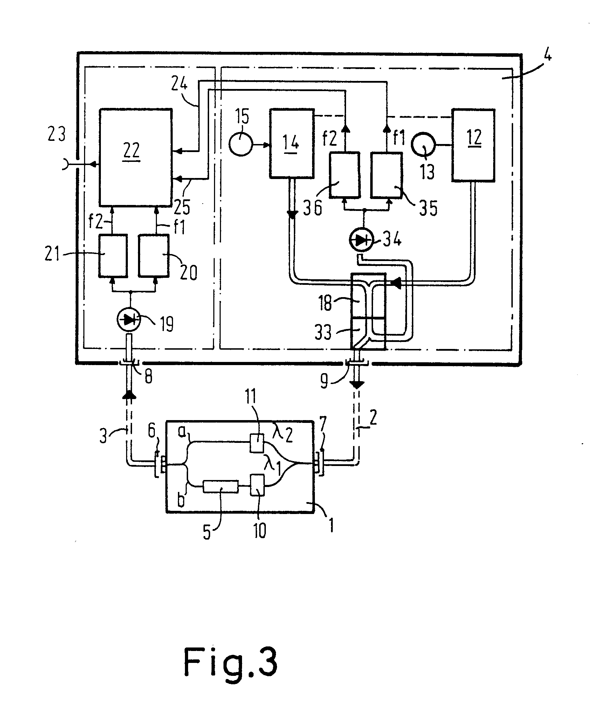

Bei der in Figur 2 angedeuteten Abwandlung sind die Meßeinrichtung 4' und der Sensor I über eine einzige optische Leitung 30 mit nur einem Lichtwellenleiter verbunden, welcher sowohl die eingehende als auch die ausgehende optische Strahlung leitet. Durch den gegenüber Figur I zusätzlichen optischen Verzweiger 3I wird ein Teil der ausgehenden Strahlung abgezweigt und über den Weg 32 zur Photodiode I9 geleitet.

Bei der bevorzugten Meßanordnung nach Figur 3 wird das Licht der Sender I2 und I4 über einen Koppler I8 zusammengeführt. Danach folgt eine optische Weiche 33, die einerseits Licht über den Stecker 9 auf die Faserstrecke 2 gibt, andererseits einen Teil des Lichts zur Kontrollphotodiode 34 leitet. Über entsprechende elektrische Frequenzfilter 35 und 36 werden die Modulationsamplituden detektiert und der Verarbeitungs-und Ausgabeschaltung 22 übermittelt bzw. zur Regelung an die optischen Sender I2 und I4 weitergegeben.

Der Vorteil dieser Anordnung ist, daß für die Messung der Modulationsamplituden nur eine Photodiode benötigt wird, so daß unterschiedliche Alterungen oder Dunkelströme der Photodioden 26 und 27 nach Figur I keinen Meßfehler bewirken können. Darüber hinaus benötigt man nur zwei optische Koppler statt insgesamt drei in Figur I. Die Kontrolle des Lichts erfolgt direkt vor dem Ausgang 9. Eventuell unterschiedliche Frequenzeinflüsse des Kopplers I8 werden über den Regelkreis erfaßt.

Die Erfindung wurde nur beispielhaft in Anwendung für eine Druck-oder Temperaturmessung mittels elektrisch passiver Sensoren I bzw. I' erläutert. Das erfindungsgemäße Verfahren ist jedoch in allen vergleichbaren Fällen ebenso vorteilhaft anwendbar, bei denen über einen gemeinsamen Übertragungsweg gesendet, Licht verschiedener Wellenlängen enthaltende optische Strahlung wellenlängenselektiv hinsichtlich der Abdämpfung durch den Übertragungsweg gemessen werden soll. Beispielsweise kann der spektrale Dämpfungsverlauf eines Lichtwellenleiters dadurch bestimmt werden, daß mittels einer Meßeinrichtung der in Figur I beschriebenen Art eine Mehrzahl von modulierten Lichtstrahlen verschiedener Wellenlänge durch die Faser gesendet und deren Intensitätsabschwächungen nachfolgend von der Meßeinrichtung selektiv ermittelt werden. Die durch einen einzigen Mehrfachmeßvorgang für jede einzelne Wellenlänge ermittelten Meßwerte der Dämpfung können auf einem Bildschirm als Funktion der Wellenlänge dargestellt werden.

## Ansprüche

I. Verfahren zur wellenlängenselektiven Messung der in einem optischen Übertragungssystem hervorgerufenen Abschwächung der Intensität einer optischen Strahlung, welche Licht mindestens zweier Wellenlängen enthält,
dadurch gekennzeichnet, daß das Licht jeder Wellenlänge durch optische Sender erzeugt wird, deren Sendeintensitäten mit voneinander verschiedenen, jedoch jeweils konstanten Modulationsfrequenzen moduliert werden, daß die Modulationsamplituden durch eine oder mehrere optische Kontrolldetektoren gemessen werden, denen ein Teil der modulierten Strahlung zugeführt wird, daß danach die modulierten optischen Strahlungen in das optische Übertragunssystem geleitet werden, daß die das Übertragungssystem verlassende Strahlung in einem einzigen Photodetektor in ein elektrisches Summensignal umgewandelt wird, welches danach parallel auf jeder Modulationsfrequenz zugeordnete und nur diese jeweils durchlassende elektrische Filter geleitet wird, und daß schließlich die nach den Filtern gemessenen Amplitudenschwankungen getrennt für jede Wellenlänge jeweils mit den Modulationsamplituden in einer elektrischen Vergleichs-und Datenausgabeschaltung verglichen werden.

2. Verfahren nach Anspruch I,

dadurch gekennzeichnet, daß die modulierten optischen Strahlen innerhalb einer Meßanordnung durch einen optischen Koppler (18) vereint werden, daß von der gebildeten Summenstrahlung ein Teil durch eine optische Weiche (33) abgezweigt und einem optischen Kontrolldetektor (34) zugeführt wird, dessen elektrisches Ausgangssignal über auf die Modulationsfrequenzen abgestimmte elektrische Filter (35 bzw. 36) in die frequenzselektiven Signale selektiert wird, welche über zugeordnete Leitungen (24, 25) der Verarbeitungs-und Ausgabeschaltung (22) zugeführt werden.

3. Verfahren nach Anpruch I oder 2,

dadurch gekennzeichnet, daß die Sendeintensitäten der optischen Sender auf konstante Werte geregelt sind, und daß deren Ist-Werte durch eine oder mehrere optische Kontrolldetektoren erfaßt werden.

4. Verfahren nach einem der Ansprüche I bis 3,

dadurch gekennzeichnet, daß der spektrale Dämpfungsverlauf eines Lichtwellenleiters gemessen wird.

5. Verfahren nach einem der Ansprüche I bis 3,

dadurch gekennzeichnet, daß das optische Übertragungssystem einen optischen Sensor enthält.

6. Verfahren nach Anspruch 5,

dadurch gekennzeichnet, daß das Licht mindestens einer Wellenlänge innerhalb des optischen Übertragungssystems am optischen Sensor vorbeigeführt wird.

7. Verfahren nach Anspruch 5 oder 6,

dadurch gekennzeichnet, daß der optische Sensor ein Element ist, dessen optische Dämpfung druckabhängig ist.

8. Verfahren nach Anspruch 5 oder 6,

dadurch gekennzeichnet, daß der optische Sensor ein Element ist, dessen optische Dämpfung temperaturabhängig ist.

9. Verfahren nach einem der Ansprüche I bis 8,

dadurch gekennzeichnet, daß die eingehende und ausgehende Strahlung des optischen Übertragungssystems über einen einzigen Lichtwellenleiter geleitet werden, und daß die von diesem Lichtwellenleiter geführte Strahlung über einen optischen Verzweiger geleitet wird, dessen einer Abzweig einen Teil der ausgehenden Strahlung zum Photodetektor der Meßeinrichtung führt.

Fig.1

Fig.2

Fig.3